# EUROPEAN PATENT APPLICATION

(11) **EP 1 445 893 A2**
(43) Date of publication of application: **11.08.2004**
(21) Application number: 03104882.0
(22) Date of filing: 22.12.2003
(51) Int. Cl.: H04L 12/28

(54) **Management of wireless local area network**

(30) Priority: 31.12.2002 FI 20022299
(71) Applicant: Vioteq Oy, 33720 Tampere (FI)
(72) Inventor: Suolahti, Jari, 37150 Nokia (FI)
(74) Representative: Kaukonen, Juha Veikko

(57) **Abstract**

The invention relates to management of access points in a wireless local area network. The access points store identifiers of service devices authorized to transmit configuration data and authentication data associated with the identifiers and required to authenticate the server devices. At least a server device identifier and an authentication token created in the server device are transmitted from the server device to at least one access point when at least one access point needs to be configured. The received authentication token is compared with a reference authentication token determined in the access point. An encrypted connection tunnel is arranged for access point management if the received authentication token corresponds to the reference authentication token. The configuration data are transmitted to the access point using the encrypted connection tunnel and the access point is configured on the basis of the received configuration data.

## Description

### FIELD OF THE INVENTION

The invention relates to management of access points in wireless local area networks.

### BACKGROUND OF THE INVENTION

To offer wireless wideband data transmission, various wireless local area network solutions have been devised that provide wideband wireless data transmission service in a very limited coverage area. These techniques include WLAN networks (Wireless Local Area Network) based on IEEE 802.11. A wireless local area network can be established between two devices, in which case the resulting network is an ad-hoc network. A wireless local area network can also be used as an access system to other networks. This requires an access device, which can also be generally called an access point. An access point may serve several terminals, and access points can be arranged so as to provide a coverage area inside an office, for example. Access can be provided from the access points to a fixed local area network and other networks, such as the Internet. In fact, wireless local area networks are used to offer high-speed data transmission and access to the Internet at various hot spots, for example at offices or airports.

The access points require various data on the operation of a wireless local area network. These include identification data on users entitled to use the wireless local area network and radio channel settings. The access point data have to be updated when new access points are added, for instance. To avoid separate configuration of each access point on site, various management systems for access points in wireless local area networks have been devised where access point data can be configured from a separate networked device, which can be called, for example, an access point controller or an access point management server. In conventional management systems, access points are managed one device at a time using the Telnet virtual terminal protocol or SNMP protocol (Simple Network Management Protocol). A WWW browser and an HTTP protocol (Hypertext Transfer Protocol) may also be used. The conventional systems for managing access points in wireless local area networks involve, however, data security risks since in the Telnet and HTTP protocols, for example, data are transmitted as cleartext. In addition, security gaps, through which an external attacker may access the devices, have been found in the SNMP protocol. EP 0 658 021 describes a method of installing base stations in a WLAN network, where the base station may authenticate the device that implements installation. This application does not, however, teach how access points could be managed securely.

### BREIF DESCRIPTION OF THE INVENTION

The object of the invention is to provide a more secure method and an apparatus implementing the method for managing access points in a wireless local area network. The object of the invention is achieved by a method, system, server device, access point and computer program product, which are characterized by what is stated in the independent claims. Preferred embodiments of the invention are disclosed in the dependent claims.

According to the invention, access points store identifiers of server devices authorized to transmit configuration data and authentication data associated with the identifiers and required to authenticate the server devices. The server device transmits at least the server device identifier and an authentication token created in the server device to at least one access point if at least one access point needs to be configured. In the access point, the received authentication token is compared with a reference authentication token determined in the access point. Encryption keys are determined for the server device and the access point to provide an encrypted connection tunnel for access point management if the required authentication token corresponds to the reference authentication token determined in the access point, i.e. if the server device has been authenticated in the access point. Configuration data are transmitted to the access point using the encrypted connection tunnel, i.e. using the encryption keys associated therewith, and the access point is configured on the basis of the received configuration data.

The arrangement according to the invention improves the security of access point management. Since the server that tries to perform configuration can now be authenticated in the access points, only authorized servers with the necessary means for creating an authentication token have the opportunity of transmitting configuration data to the access points. In the solution according to the invention, the configuration data can be transferred as encrypted if the authentication has succeeded. In that case, the access points of the wireless local area network can be managed remotely over public networks, such as the Internet, in a reliable and centralized manner.

### BRIEF DESCRIPTION OF THE FIGURES

The invention will now be described in greater detail by means of preferred embodiments with reference to the accompanying drawings, in which
Figure 1 illustrates a wireless local area network system;
Figure 2 illustrates an access point and a management server according to a preferred embodiment of the invention;
Figures 3a and 3b are flow charts illustrating a method according to a preferred embodiment of the invention; and
Figure 4 is a signalling chart illustrating data transmission between a management server and an access point.

### DETAILED DESCRIPTION OF THE INVENTION

The invention is applicable to the management of any wireless local area network. Such wireless local area networks include networks based on various IEEE 802.11 standards, such as the IEEE 802.11b standard. However, the invention can also be applied in other kinds of wireless local area networks, for example in HomeRF networks, Bluetooth networks or in Hiperlan-based networks.

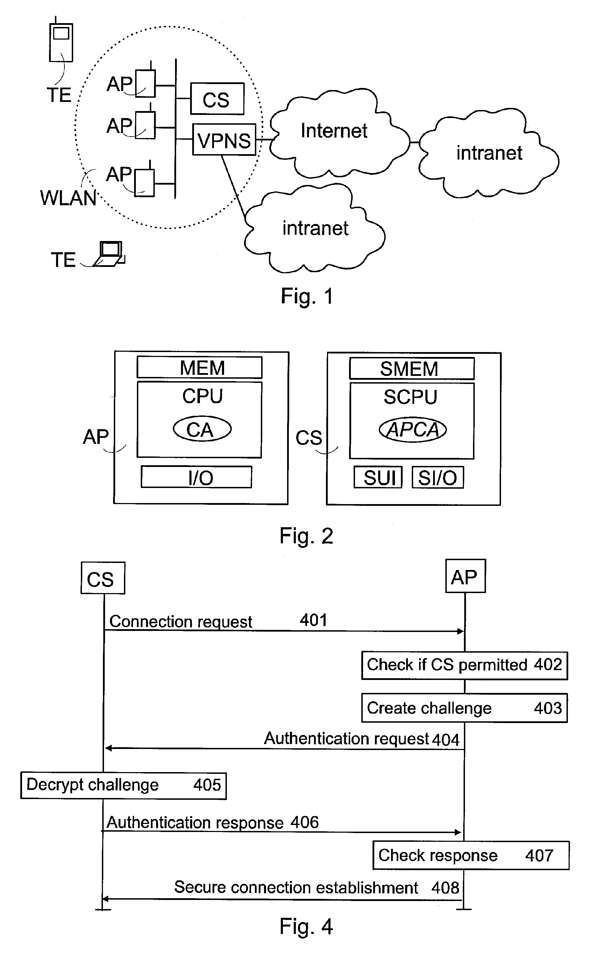

Figure 1 illustrates a telecommunications system comprising a wireless local area network WLAN. The WLAN comprises access points AP, a management server CS for managing the access points AP and at least one security server VPNS. According to a preferred embodiment, the VPNS is a VPN server (Virtual Private Network), which provides a tunnel between a terminal TE and the server VPNS, which results in a better security level compared to that usually achieved by conventional encryption techniques employed in wireless local area networks. Naturally, encryption techniques employed over the radio interface of the wireless local area network can also be used, such as the WEP protocol (Wired Equivalent Privacy) or its enhanced versions. The tunnel can be established using any tunnelling technique, for example the GRE protocol (Generic Routing Encapsulation). Even though the CS and the VPNS are separate in Figure 1, their operations can also be implemented in the same server device.

The access point AP manages the radio interface according to the radio technology employed; in a preferred embodiment according to the IEEE 802.11 standard, with which a person skilled in the art is familiar. IEEE 802.11 specifications determine protocols for both the physical layer and for the MAC layer for data transmission over the radio interface. Data transmission may employ infrared or two spread spectrum techniques (Direct Sequence Spread Spectrum DSSS, Frequency Hopped Spread Spectrum FHSS). Both spread spectrum techniques utilize a band of 2.4. gigahertz. The MAC layer employs what is known as the CSMA/CA technique (Carrier Sense Multiple Access with Collision Avoidance). The AP is also responsible for bridging radio interface data flows or for routing them to other network nodes, such as other access points and servers CS, VPNS, and from other network nodes. The terminal TE may be, for example, an integrated communication device, a laptop computer, connected to an apparatus providing radio access (e.g. a WLAN card) or a combination of a PDA device and a mobile station. The means that provide WLAN access and VNP connection may be integrated into the same device, for instance into a PDA device.

According to a preferred embodiment of the invention, no connections other than VPN connections are allowed to terminals TE. The following describes connection establishment allowed in the network WLAN from the terminal TE according to a preferred embodiment. The TE obtains a Beacon message passively or receives a message (Probe Response) from the AP by a separate request (Probe Request). The message provides the terminal TE with the data required for communication with the access point AP. The AP checks the TE's MAC address, and if the MAC address is on the access list maintained by the AP, the AP allocates an IP address to the TE. Only this MAC/IP address pair of the TE may be used for establishing a connection to allowed VPN servers VPNS. In that case, the terminal TE that tries to establish a connection via the wireless local area network always has to establish a connection to the VPN server VPNS, to which the TE transmits a user identifier and a password or other identification data. The VPNS checks the terminal's TE (user's) user rights, authenticates the terminal TE and provides a VPN tunnel if the authentication of the TE succeeds. The VPNS is arranged to deny the terminal a wireless connection if the terminal TE has no right to use services. This embodiment allows to improve the security of the wireless local area network WLAN and avoid impermissible connections between two terminals TE established via the access point AP, for example. The tunnel between the VPN server VPNS and the terminal TE that employs efficient encryption ensures a high data security level. Thus it is unnecessary to encrypt the radio interface in this embodiment. Preferably even the first messages between the terminal TE and the VPN server VPNS are encrypted, for example, by means of the MPPE protocol (Microsoft Point-to-Point Encryption) described in RFC specification 3078, March 2001, in which case user identifiers and passwords are transmitted as encrypted from end to end.

According to an embodiment, the access points AP are outside the firewall and access to a company-internal intranet network is allowed only via the VPN server VPNS. In that case, the wireless local area network WLAN is completely isolated from the intranet network. According to a further embodiment, when the terminal TE moves from the coverage area of a first access point to the coverage area of a second access point, a tunnel can be established via the second access point without having to modify the tunnel settings in the VPN server VPNS. This is feasible since the tunnel is bound only to the terminal TE in the VPN server, in which case the access point AP to be used may change. This embodiment enables faster changeover of access points AP since authentication and installation of a GRE tunnel in the VPN server VPNS, for example, are unnecessary.

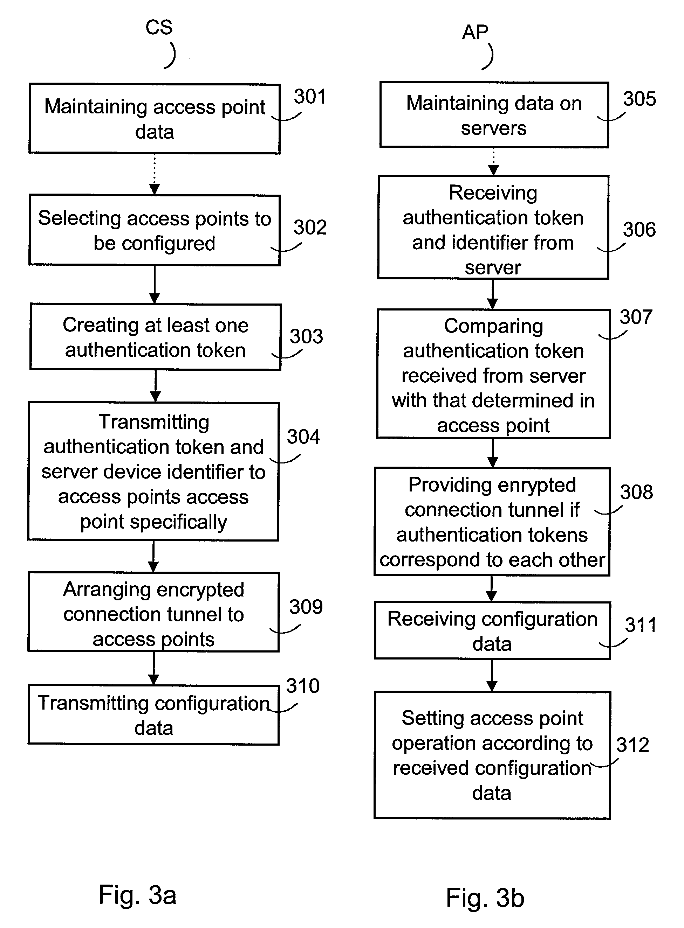

Figure 2 illustrates an access point AP and a management server CS, which respectively comprise memory MEM; SMEM, I/O means I/O; SI/O for implementing data transmission and a central processing unit CPU; SCPU comprising one or more processors. The CS also comprises user interface means SUI, typically for connecting a display and a keyboard. The memory MEM; SMEM includes a non-volatile part for storing applications controlling the central processing unit CPU; SCPU and other data to be stored and a volatile part for temporary data processing. According to an embodiment, the file system of the access point AP is copied from the flash memory into the random access memory RAM when the access point AP is activated. In that case, the applications implementing the functions of the access point AP are activated according to the configuration data stored in the random access memory and the AP may function entirely on the basis of the random access memory while the flash memory is off. This provides the advantage that power failures do not damage the flash memory and the actual operating system, and consequently recovery from power failures is very quick. The AP typically comprises a plurality of access cards for arranging wireless data transmission with the terminals TE. Preferably, access cards can be set to function independently of one another, and they can be identified with their own network identifiers. In that case, access point AP resources can be allocated in a terminal-specific manner and separate sub-networks established logically. For access point management, the management server CS implements a management application APCA, by means of which the operation of access points AP can be followed and controlled automatically and/or by the network administrator. Computer program codes to be executed in the central processing unit SCPU can also make the management server CS implement the inventive means related to the management of access points AP. Embodiments of these means are illustrated in Figures 3 and 4. The inventive features, which are illustrated in greater detail in Figures 3 and 4 and are related to the access point AP management and communication with the server device CS, can be implemented in the access points AP by executing computer program codes in the processing unit CPU. These features are denoted by application CA in Figure 2. The computer program may be stored in any memory means, for example in the hard disk of a PC or in a CD-ROM, from which it can be loaded into the memory SMEM of the device CS that executes it or into the memory MEM of the device AP. The computer program may also be loaded via the network using a TCP/IP protocol stack or transferred in a memory circuit into the device AP or CS. The inventive means may also be implemented by hardware solutions or a combination of hardware and software solutions.

Figures 3a and 3b are flow charts illustrating a method according to a preferred embodiment of the invention. Figure 3a illustrates operations to be performed in the management server CS and Figure 3b illustrates operations to be performed in the access point AP. The management server CS maintains 301 data on the access points AP managed by it and on the configuration data associated therewith. The data are preferably stored in an access point-specific manner on the basis of the access point identifier, such as the name. The configuration data comprise data related to implementation of authentication and encryption, which are described in greater detail in connection with Figure 4. The configuration data may also be maintained in an access point- specific manner, in which case all settings of the access point AP, for example, are retrievable separately to the screen of the management server CS so that the network administrator can check and edit them. The management application APCA of the network is responsible for storing and updating the access point data, including the configuration data.

The access points to be configured are selected 302 in the management server. A need to configure one or more access points AP may result from an input by the network administrator, or configuration may be performed on the basis of a predetermined initiation setting, for example at a predetermined moment or at predetermined intervals. Several access points may be configured substantially simultaneously, which enables quick and easy i n-troduction of new settings in all access points AP of the wireless local area network WLAN. Since the management application APCA allows to configure several access points AP in a centralized manner, the network administrator does not need to enter the settings manually into each access point AP.

At least one authentication token 303 is created 303 in the server CS. The token generally refers to a code sequence, which the access point AP utilizes for authenticating the management server CS by checking the sequence. According to a preferred embodiment, authentication tokens are access point specific, in which case only the correct access point may perform the authentication. The authentication token can be created on the basis of a shared secret, such as a symmetrical encryption key, and/or it may be created on the basis of a challenge transmitted by the access point AP (not shown in Figures 3a and 3b). Public key cryptography may also be used for authentication. At least the service device identifier and authentication token are transmitted 304 from the server CS to the access point AP to be configured.

The access points AP store 305 identifiers of the management servers CS authorized to transmit configuration data and authentication data associated with the identifiers and required for authenticating the management servers. The access point AP receives at least the CS identifier and authentication token from the management server CS.

The server device CS is authenticated 307 in the access point AP on the basis of the received authentication token and the authentication data stored in the access point AP. The AP preferably first checks the identifier of the management server CS. If the management server CS according to the identifier is authorized to configure the access point AP, it retrieves the authentication data and, on the basis of them, checks the authenticity of the received authentication token, i.e. performs authentication on the management server CS. In that case, the AP compares 307 the received authentication token with the reference authentication token it has determined itself. Authentication can be performed in various ways, and the authentication data to be stored are dependent on the authentication technique to be used; the authentication data may be, for example, a shared secret between the management server CS and the access point AP on the basis of which the CS creates an authentication token and the AP determines a reference value to which it is compared.

If the authentication of the management server CS succeeds in the access point AP, i.e. if the received authentication token corresponds to the reference authentication token determined by the access point AP, an encrypted connection tunnel is established 308, 309 between the CS and the AP for access point management. This means that the CS and AP encrypt the data so that the data are transmitted as encrypted from end to end between the AP and the CS. The AP preferably transmits an acknowledgement on successful authentication to the CS, on the basis of which encryption keys for encrypting the data to be transmitted and decrypting the data to be received can be introduced in the management server CS and access point AP. Steps 308 and 309 typically include negotiation on the encryption method to be used (not shown in greater detail in Figure 3), in which case the CS functioning as a client in respect of authentication may ask the access point AP, which encryption method is to be used. The AP checks the available encryption methods and selects one of them for the management session. After this, the CS and AP start using the selected encryption method and the encryption keys to be utilized in it for encrypting messages to be transmitted. Depending on the application, the encryption keys may have been set in advance in the memories MEM, SMEM of the devices AP and CS, or they may be determined by software using a key creation algorithm. The encryption technique may be symmetric or asymmetric. The asymmetric encryption technique provides a higher security level and the keys can be formed so that the decryption key is underivable from the encryption key. An encryption system according to which a secure connection can be established is 3DES (Triple Data Encryption Standard), which utilizes three different keys for encryption. Another efficient encryption system is Blowfish; examples of other encryption systems include CAST128, AES (Advanced Encryption Standard) and Arcfour.

Configuration data are transmitted 310 to the access point AP using the encrypted connection tunnel, i.e. set encryption keys. The access point AP received 311 the configuration data. The operation of the access point AP is set 312 on the basis of the received configuration data, and at least the configuration data are stored in the memory MEM of the AP. The configuration data may be transmitted 310 automatically immediately after the connection establishment (authentication and connection are formed for immediate configuration) or after the administrator has selected transmission of configuration data or according to a predetermined transmission setting, for example at a certain moment (if the connection is maintained for subsequent configuration).

At least some of the following access point settings may be managed at the management server CS, transmitted in the configuration data and set in the access point AP according to the received configuration data:
a) channel selections
b) transmission power and sensitivity
c) network name
d) SSID (Service Set Identifier)
e) base station name, MAC address and IP address
f) firewall rules; e.g. ports to which connections are allowed
g) management of the IP addresses of terminals (APCA may allocate each access point AP an address sub-space from which the IP addresses are to be allocated to the terminals TE).

According to an embodiment, one or more command sequences are created in the management server CS for configuring the access point AP. The command sequences are transmitted in step 311 using the encrypted connection tunnel to a predetermined update directory of the access point. The contents of the update directory are checked at predetermined intervals in the access point AP and the command sequences stored in the update directory are executed in step 312. This is an efficient way for fast configuration of the access points AP. According to a preferred embodiment, the access point AP uses a UNIX-based operating system, in which case the access point AP does not need to be reactivated after configuration of the system settings. Other techniques may also be employed for configuring access points AP using the encrypted connection. The configuration settings may be modified by programs that are executed independently and transferred from the management server CS.

The management server CS may provide the network administrator with easy modification of configuration data by means of a browser-based user interface. Using the management application APCA, the administrator may create several separate access point groups that are independent of one another and have different settings. This further facilitates and diversifies access point management compared to prior art management solutions. The management server CS may store group-specific configuration data in a separate file, for example, where the configuration settings of all access points belonging to the group can be modified quickly. It is also easy to update group-specific configuration data to all access points associated with the group, and the network administrator does not need to set configuration data separately to all access points AP.

In addition to the authentication illustrated in Figure 3, the user of the management server CS may also be authenticated according to a preferred embodiment of the invention. This can be implemented by means of HTTPS/SSL (Hypertext Transfer Protocol, Secure/Secure Sockets Layer), in which case the user has to enter the user identifier and password to be permitted to modify the configuration settings. This embodiment further improves the security level in the access point management system since only the persons aware of the correct user identifier and password can modify the configuration of access points AP.

The method described above enables secure management of access points AP in the wireless local area network WLAN. According to a preferred embodiment, the access points AP are not allowed to establish a connection to the management server CS or transmit data to it without a request sent by the management server CS. In that case, parties that have stolen access points, for example, can be denied access to the management server CS and thus access to the essential data on the whole system. According to an alternative embodiment, connection establishment is also allowed from the access points AP. The access points AP may then also be authenticated in the management server CS in addition to the steps described above to improve the security level.

It should be noted that the configuration data may be transmitted on the encrypted connection established on the basis of a previous authentication. In respect of data security and resource utilization, it is more advantageous to clear the encrypted connection tunnel immediately after the transmission of the configuration data (after step 311) and perform authentication and connection tunnel establishment separately each time when at least one access point AP needs to be configured. The order in which the steps are performed may vary from one embodiment to another, and authentication, for example, may include additional steps that are not illustrated in Figures 3a and 3b.

Figure 4 illustrates data transmission between the management server CS and the access point AP in a preferred embodiment that applies public key cryptography. In that case, the management server CS and access point AP both have at least one key pair consisting of a secret key and a public key. At least the secret keys are stored in the devices CS and AP, and at least the access point AP has access to the public key of the CS. The key pairs can be created using the SSH-keygen program, for example. When at least one access point AP needs to be configured from the management server CS, or when the access point AP is connected under control of the management of the management server CS, the server CS determines a management session identifier on the basis of access point specific data from an earlier management session identifier. The management session identifier may be a shared Diffie-Hellman value known only to the CS and AP. The management session identifier is signed with the secret key of the management server CS. The signed identifier is compressed into a connection request, which is transmitted 401 to the access point AP. The access point AP checks the signature using the public key of the management server CS, i.e. it determines whether the management server CS has really transmitted message 401. On the basis of the identifier of the management server CS the AP checks whether the management server CS in question is authorized to configure the access point AP. If the management server CS is authorized to do this, a key pair in accordance with the management session identifier is selected in the access point AP. The public key of the management server CS is stored in the access point AP, which creates 403 a challenge employing this key. The challenge may be any data sequence encrypted with the public key of the management server CS. For example, a random number can be used for creating the challenge. The data sequence used for creating the challenge is stored in the AP's memory and the AP transmits an authentication request 404, which contains at least the challenge, to the management server CS.

The management server CS decrypts 405 the challenge using the secret key of the CS. The data obtained from challenge decryption is transmitted 406 (authentication response) to the access point AP for checking. The data correspond to the authentication token described in connection with Figures 3a and 3b, and the data sequence determined for the AP and stored in it corresponds to the reference authentication token. The AP compares 407 (check response) the received data with the stored data sequence from which the challenge was created. It is confirmed in the access point that the management server CS has been authenticated if the data received from the management server CS, i.e. the decrypted challenge, correspond to the data sequence stored in the access point AP, which proves that the management server CS really has the secret key corresponding to its public key. If the authentication of the CS succeeds, the AP transmits message 408 (secure connection establishment), which at least indicates that an encrypted connection can be implemented. The message 408 may also be directly a message of the connection establishment protocol for negotiating the encryption method to be used, for example. According to an embodiment, the public and secret keys used for authentication are used for encryption: when the management server CS has configuration data that are to be transmitted to the access point AP, it may encrypt the data using the AP's public key and only the AP having the correct secret key can decrypt the configuration data.

A very reliable authentication and encrypted connection can be achieved by the method illustrated in Figure 4. It should be noted that other authentication and encryption methods may also be used. For example, a solution supporting the IPSec protocol (Internet Protocol Security) is applicable.

It is obvious to a person skilled in the art that as technology advances, the inventive concept can be implemented in various ways. The invention and its embodiments are thus not limited to the examples described above but they may vary within the scope of the claims.

## Claims

1. A method of managing access points in a wireless local area network, which comprises a plurality of access points and at least one server device, the method comprising
storing (305) server device identifiers and authentication data associated therewith and required to authenticate the server devices in the access points,
transmitting (304) at least the server device identifier and an authentication token created in the server device from the server device to at least one access point,
comparing (307) the received authentication token with a reference authentication token determined in the access point,
providing (308; 309) the server device and access point with encryption keys for implementing an encrypted connection tunnel in response to the received authentication token corresponding to the reference authentication token determined in the access point, **characterized by**
maintaining (301) configuration data that determine the operation of the wireless local area network in the server device,
storing (305) the identifiers of the server devices authorized to transmit configuration data in the access points,
transmitting (304) the server device identifier and authentication token from the server device in response to a need to configure at least one access point,
transmitting (310) the configuration data to the access point using the encrypted connection tunnel, and
configuring (312) the access point on the basis of the received configuration data.

2. A method according to claim 1, **characterized by**
creating an authentication challenge in the access point on the basis of the authentication data to be stored,
transmitting the authentication challenge from the access point to the server device,
creating the authentication token, i.e. an authentication response, in the server device on the basis of the authentication challenge.

3. A method according to claim 1 or 2, **characterized in that**
authentication is arranged in the wireless local area network using a public key authentication method, where the server device and the access point both have at least one key pair consisting of a secret key and a public key, the method comprising:
determining a management session identifier in the server device,
signing the identifier with the secret key of the server device,
transmitting the signed identifier to the access point,
checking the signature in the access point,
selecting the key pair according to the identifier in the access point in response to the verification of the signature as a signature transmitted by the server device,
creating an encrypted challenge with the public key of the server device in accordance with the key pair selected in the access point,
decrypting the challenge in the server device using the secret key of the server device,
transmitting the challenge as the authentication token to the access point for checking,
confirming the server device as authenticated in the access point in response to the challenge received from the server device corresponding to the challenge encrypted in the access point.

4. A method according to any one of the preceding claims, **characterized by**
initiating data transmission between the access points determined for configuration and the server device in response to an initiation setting determined for the server device in advance.

5. A method according to any one of the preceding claims, **characterized by**
creating at least one command sequence in the server device for configuring the access point,
transmitting the command sequence to a predetermined update d i-rectory of the access point using the encrypted connection,
checking the contents of the update directory at predetermined intervals in the access point, and
executing the command sequences stored in update directory in the access point.

6. A wireless local area network system comprising a plurality of access points and at least one server device, wherein
at least one access point is arranged to store (305) server device identifiers and authentication data associated therewith and required to authenticate the server devices,
the server device is arranged to transmit (304) at least the service device identifier and an authentication token created in the server device to at least one access point,
the access point is arranged to compare (307) the received authentication token with a reference authentication token determined in the access point,
the server device and access point are arranged to determine (308; 309) encryption keys for the server device and access point for providing an encrypted connection tunnel in response to the received authentication token corresponding to the reference authentication token determined in the access point, **characterized in that**
the server device is arranged to maintain (301) data that determine the operation of the wireless local area network,
the access point is arranged to store (305) data on server devices authorized to transmit configuration data,
the server device is arranged to transmit (304) the server device identifier and the authentication token in response to a need to configure at least one access point,
the server device is arranged to transmit (310) configuration data to the access point using the encrypted connection tunnel, and
the access point is arranged to modify (312) its settings on the basis of the received configuration data.

7. A server device for a wireless local area network, wherein
the server device is arranged to transmit (304) at least a server device identifier and an authentication token created in the server device to at least one access point,
the server device is arranged to determine (309) at least one encryption key for providing an encrypted connection tunnel between the server device and the access point in response to the fact that the access point allows connection establishment, **characterized in that**
the server device is arranged to maintain (301) data determining the operation of the wireless local area network,
the server device is arranged to transmit (304) the service device identifier and authentication token in response to a need to configure at least one access point, and
the server device is arranged to transmit (310) configuration data to the access point using the encrypted connection tunnel.

8. An access point for a wireless local area network arranged to provide terminals with a wireless connection and receive configuration data from a server device,
the access point is arranged to store (305) server device identifiers and authentication data associated therewith and required to authenticate the server devices,
the access point is arranged to receive (306) at least the server device identifier and an authentication token created in the server device from the server device,
the access point is arranged to compare (307) the received authentication token with a reference authentication token determined in the access point,
the access point is arranged to determine (308) at least one encryption key for providing an encrypted connection tunnel between the server device and the access point in response to the received authentication token corresponding to the reference authentication token determined in the access point, **characterized in that** the access point is arranged to store (305) data on the server devices authorized to transmit configuration data,
the access point is arranged to receive (311) configuration data from the server device using the encrypted connection tunnel, and
the access point is arranged to modify (312) its settings on the basis of the received configuration data.

9. A computer program product for wireless local area network for controlling a server device, the computer program product comprising:
a computer program code portion for controlling the server device to transmit (304) at least a server device identifier and an authentication token created in the server device to at least one access point,
a computer program code portion for controlling the server device to determine (309) at least one encryption key for providing an encrypted connection tunnel between the server device and the access point in response to the fact that the access point allows connection establishment, **characterized in that** the computer program product further comprises:
a computer program code portion for controlling the server device to transmit (304) the server device identifier and authentication token in response to a need to configure at least one access point, and
a computer program code portion for controlling the server device to transmit (310) configuration data to the access point using the encrypted connection tunnel.

10. A computer program product for wireless local area network for controlling an access point, the computer program product comprising:
a computer program code portion for controlling the access point to store (305) server device identifiers and authentication data associated therewith and required to authenticate the server devices,
a computer program code portion for controlling the access point to receive (306) at least the server device identifier and an authentication token created in the server device from the server device,
a computer program code portion for controlling the access point to compare (307) the received authentication token with a reference authentication token determined in the access point,
a computer program code portion for controlling the access point to determine (308) at least one encryption key for providing an encrypted connection tunnel between the server device and the access point in response to the received authentication token corresponding to the reference authentication token determined in the access point, **characterized in that** the computer program product further comprises:
a computer program code portion for controlling the access point to store (305) data on the server devices authorized to transmit configuration data,
a computer program code portion for controlling the access point to receive (311) configuration data from the server device using the encrypted connection tunnel, and
a computer program code portion for controlling the access point to modify (312) its settings on the basis of the received configuration data.
